Europäisches Patentamt

European Patent Office

Office européen des brevets

(19)

(11) Publication number: **0 360 867**

**A1**

(12)

# EUROPEAN PATENT APPLICATION
## published in accordance with Art. 158(3) EPC

(21) Application number: 89900641.5

(22) Date of filing: 14.12.88

(86) International application number:
**PCT/JP88/01268**

(87) International publication number:
**WO 89/05698 (29.06.89 89/14)**

(51) Int. Cl.⁵: **B21C 37/06 , B23P 11/02 , //F16L9/00**

(30) Priority: **14.12.87 JP 314065/87**

(43) Date of publication of application:
**04.04.90 Bulletin 90/14**

(84) Designated Contracting States:
**DE FR GB NL SE**

(71) Applicant: **Kawasaki Jukogyo Kabushiki Kaisha**
**1-1 Higashikawasaki-cho 3-chome Chuo-ku**
**Kobe-shi Hyogo 650-91(JP)**

(72) Inventor: **MATSUI, Shigetomo**
**4-25, Higashiyama-cho**
**Higashiosaka-shi Osaka 579(JP)**
Inventor: **YAMASHITA, Seiji**
**13-7, Wakabadai 1-chome Kita-ku**
**Kobe-shi Hyogo 651-11(JP)**
Inventor: **ARAKI, Toshiaki**
**5, Aza Higashikawara Kuchisakai**
**Itami-shi Hyogo 664(JP)**

(74) Representative: **Klunker . Schmitt-Nilson . Hirsch**
**Winzererstrasse 106**
**D-8000 München 40(DE)**

(54) **METHOD OF WORKING DOUBLE TUBE.**

(57) An inner tube (2) is inserted into an outer tube (1), and an annular high-frequency induction heater (4) or a burner, and a cooler (5) adapted to sprinkle cooling water, which are combined unitarily with each other, are inserted into the inner tube (2) so that this combination of the heater and the cooler can be moved in the lengthwise direction of the inner tube (2). In accordance with a movement of the heater (4), the inner tube (2) is heated with lines of magnetic flux (6) or a gas flame and annularly expanded. The portion (9) of the inner tube (2) which is thus expanded with the heat from the heater (4) is cooled annularly with the cooler (5) moving after the heater (4) toward a position immediately behind the expanded portion (9). The expanded portion (9) of the inner tube (2) exhibits an effect of expanding a cooled portion behind the portion (9), so that this cooled portion yields, whereby the expansive deformation of the inner tube (2) occurs. When the heater (4) and cooler (5) have been moved along the entire length of the inner tube (2), the inner tube (2) comes to be combined firmly with the outer tube (1) owing to the expansion of the inner tube (2). The above-described procedure of expanding an inner

tube is also applied to expand an outer tube (1) of a combined double tube. The outer tube (1) is separated form the inner tube (2) by expansion.

FIG. I

METHOD OF PROCESSING DOUBLE-WALL PIPES

TECHNICAL FIELD

This invention relates to a method of processing or working on double-wall pipes or tubes such as those of wear-resisting construction for use as heat exchanger piping or in atomic power plants. More specifically, the invention concerns a method that can be used for expanding the inner pipe member of a double-wall pipe against the outer pipe member in the manufacture of the pipe, or for expanding the outer pipe member out of close engagement with the inner pipe member for the disassemblage of the double-wall pipe.

BACKGROUND ART

Piping finds extensive use in a variety of industries. Its presentday applications are not limited to the conveyance of fluids; instead, it has been used in recent years as beams of buildings and other structures and even for the transmission of information.

Usually, in each application of piping, the inside and outside surfaces of the pipe are subjected to totally different working conditions. For the enhancement of durability under such different working conditions, composite pipes have been suggested and used which have two or more constituent pipe members of different diameters nested together in order that their inside and outside surfaces may offer optimum resistance to pressure, heat, corrosion, abrasion, etc. The basic form of such composite pipes is the double-wall pipe comprised of inner and outer pipe members snugly fitted together against the possibility of detachment in use.

A variety of methods are known for the production of double-wall pipes. One of these is the familiar metallurgical method of making so-called clad pipes. This method is objectionable because of the many and complex manufacturing steps involved. It has also been proposed to fit together the inner and outer pipe members either thermally or by hydraulic pressure. These methods have difficulties in the application of heat or in the control of hydraulic pressure and, moreover, are more costly than the other known methods.

The instant applicant has proposed more advanced methods in U.S. Patents 4,332,073 and 4,727,641. These prior art methods are akin in that the outer pipe member is thermally contracted into a close fit with the inner pipe member. Despite their definite advantages over the more conventional methods, they have proved to be unsatisfactory when used for the manufacture of wear-resisting piping for heat exchanges, atomic power plants and like applications. Extremely stringent dimensional tolerances are imposed on the outside diameters of the outer pipe members of double-wall pipes for use in these applications for close fitting engagement with holders, brackets, etc.

Thus, despite great potential demands for double-wall pipes, there has been developed no method of producing them by expanding the inner pipe member against the outer pipe member. The advent of the method has been awaited whereby the inner pipe member can be thermally expanded into a snug fit with the outer member while the outside diameter of the latter is kept unchanged.

Also, the need exists in the use of double-wall pipes for disassembling them into the inner and outer pipe members for repair and other purposes. A method is needed, too, for ready disassemblage of double-wall pipes..

A primary object of the invention is to overcome the noted problems heretofore encountered in the production of double-wall pipes by the close interengagement of the inner and outer pipe members. More specifically, the invention provides an improved method for the manufacture of double-wall pipes of high quality that can be put to a variety of piping applications in a variety of industries. The method of the invention makes it possible to expand the diameter of the inner pipe member into a snug fit with the outer pipe member without varying the diameter of the outer pipe member to the slightest degree in so doing. The inner pipe member is expanded radially by being subjected to simple heat treatments from end to end, rather than to complex mechanical processing.

Another object of the invention is to provide a method of the above described character whereby the inner and outer pipe members of double-wall pipes can be readily separated from each other.

## DISCLOSURE OF THE INVENTION

For the accomplishment of the first recited object, the invention provides a method of manufacturing double-wall pipes, with the diameters of the outer pipe members formed to very close tolerances, for use in heat exchangers, atomic power plants, etc. The method dictates, first of all, the insertion of an inner pipe member of high carbon steel or like wear-resisting material in an outer pipe member of carbon steel or like material. A suitable heater such as a burner or a high-frequency induction heater is inserted in the inner pipe member and relatively moved longitudinally of the inner pipe member while heating successive annular part of the inner pipe member. Immediately after being heated, the successive annular part of the inner pipe member is cooled as by showers of service water. The heater and the cooler are advanced through the nested pipe members at the same speed. Consequently, the thermally expanded part of the inner pipe member tends to increase the diameter of the adjacent cooled and contracting part of the inner pipe member thereby causing its breakdown and expansive deformation. Thus heated and cooled continuously, and perhaps repeatedly, from end to end, the complete length of the inner pipe member can be expanded into a snug fit with the outer pipe member to provide a double-wall pipe in accordance with the invention. The diameter of the outer pipe member remains absolutely unchanged before and after the expansion of the inner pipe member.

The same principles are applied for the attainment of the second mentioned object. Namely, for disassembling a double-wall pipe having inner and outer pipe members snugly nested together, a heater of annular shape is placed around the outer pipe member and relatively fed in its longitudinal direction for heating successive annular part of the outer pipe member. Immediately after being so heated, the successive annular part of the outer pipe member is cooled as by showers of service water. The heater and the cooler are advanced at the same speed. The thermally expanded part of the outer pipe member tends to increase the diameter of the adjacent cooled and contracting part of the outer pipe member thereby causing its breakdown and expansive deformation. Successively heated and cooled from end to end and a required number of times, the outer pipe member can be expanded out of close engagement with the inner pipe member throughout their length.

BRIEF DESCRIPTION OF THE DRAWINGS

Figure 1 is a fragmentary axial section, partly in elevation, through two nested pipe members, shown together with heater means and cooler means for processing the pipe members into a double-wall pipe by the method of the invention;

Figure 2 is a graph explanatory of the principles of the invention;

Figure 3 is a view similar to Figure 1 but showing a different mode of carrying out the invention;

Figure 4 is a fragmentary axial section, partly in elevation, through a double-wall pipe, shown together with heater means and cooler means for disassembling the pipe by the method of the invention;

Figure 5 is a fragmentary axial section through two nested pipe members being processed into a double-wall pipe by another different mode of carrying out the invention; and

Figure 6 is a fragmentary axial section through a double-wall pipe being disassembled by a different mode of carrying out the invention.

## BEST MODES OF CARRYING OUT THE INVENTION

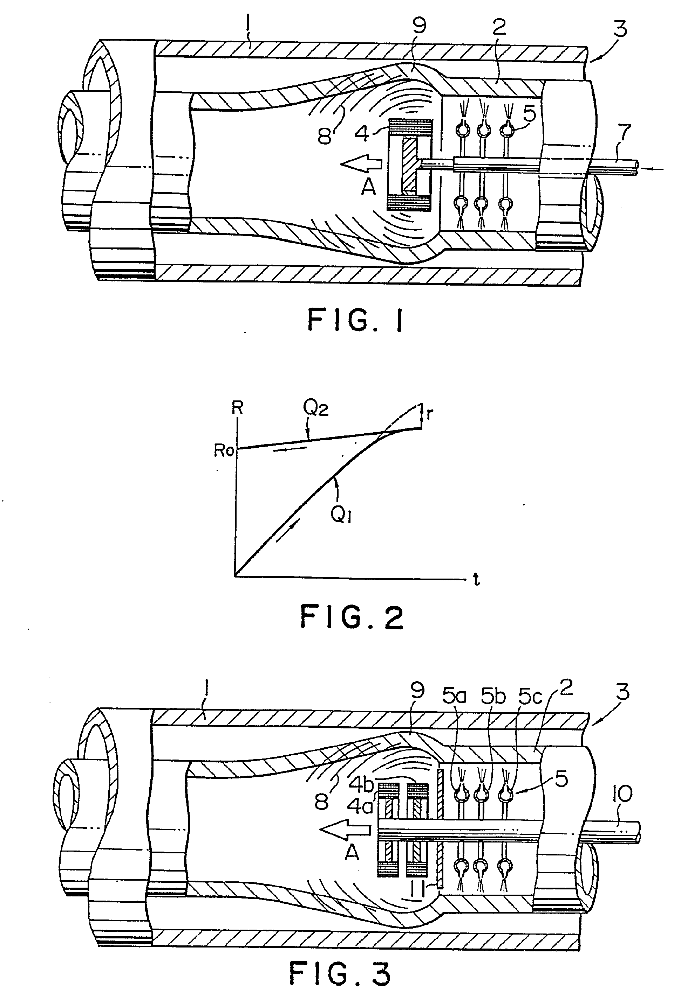

According to the method of the invention, as illustrated by way of example in Figure 1, there is first prepared a pipe assembly 3 to be worked into a double-wall pipe. The pipe assembly 3 comprises an outer pipe member 1 of a prescribed diameter, and an inner pipe member 2 of a prescribed smaller diameter loosely received in the outer pipe member. The outer pipe member 1 may be of carbon steel or like material whereas the inner pipe member 2 may be of high carbon steel or similarly wear-resistant material.

Figure 1 also shows mounted within the inner pipe member 2 a heater 4 such as a high frequency induction heater and, immediately behind it, a cooler 5 such as a shower ring assembly capable of radially ejecting showers of service water. The heater 4 and the cooler 5 are jointly advanced at a predetermined speed through the pipe assembly 3, as indicated by the arrow A. The heater 4 and the cooler 5 are rigidly linked together. The cooler 5 communicates with a water supply conduit 7.

As the heater 4 in the form of a high-frequency induction heater of annular shape advances through the pipe assembly 3, so do the lines of magnetic induction 8 due to the heater, cumulatively heating the adjacent annular part 9 of the inner pipe member 2. The thus-heated part 9 of the inner pipe member 2 gradually increases in diameter.

Immediately behind the heater 4 the cooler 5 cools the surrounding annular part of the inner pipe member 2 by showers of water. The expanded part surrounding the heater 4 tends to increase the diameter of the cooled and contracting part around the cooler 5 and so causes its breakdown and expansive deformation. As the successive annular part of the inner pipe member 2 is heated and cooled by the heater 4 and the cooler 5 traveling at the same speed, the complete length of the inner pipe member is gradually increased in diameter into a snug fit with the outer pipe member 1. The inner pipe member 2 is heated to temperatures of not less than 200° C., or not less than 400° C. for the best results, and is normally cooled to room temperature.

Thus, as the inner pipe member 2 is subjected to the above treatments from end to end, the pipe assembly 3 is processed into a double-wall pipe in which the inner pipe member makes a snug fit with the outer pipe member 1 throughout the length of the pipe.

Reference is directed to the graph of Figure 2 for a discussion of how the inner pipe member is diametrally expanded into a snug fit with the outer pipe member by the method of the invention. In this graph the axis of abscissas represents the temperature $t$ of the inner pipe member, and the axis of ordinates represents the diameter R of the inner pipe member. The curve Q1 indicates that the diameter of the innerpipe member increases with its temperature $t$. However, when the temperature exceeds a prescribed limit, the inner pipe member undergoes plastic deformation $r$ in accordance with the temperature-strain curve.

Further, on being cooled immediately after having been heated, the successive annular part of the inner pipe member has its resulting contraction limited by the preceding expanded part, as indicated by the curve Q2 in the graph of Figure 2. The inner pipe member does not contract to the original diameter but to a greater diameter Ro. This increase in diameter makes it possible to form the desired double-wall pipe in which the pipe members 1 and 2 are snugly nested together.

Various modifications or alterations are possible in the practice of the above described method of the invention. For example, the inner pipe member may be heated by a burner instead of by a high-frequency induction heater. Also, the heater and the cooler may be fed through the nested pipe assembly two or more times, instead of one, for the establishment of a more positive fit between the pipe members.

Figure 3 shows a different mode of carrying out the invention. The arrangement of Figure 3 differs from that of Figure 1 in the use of two heaters 4a and 4b disposed one behind the other in the longitudinal direction of the nested pipe assembly 3. Another difference is the provision of a splash guard 11 of disc-like shape between the heaters 4a and 4b and the cooler 5 comprising three shower rings 5a, 5b and 5c. The heaters and coolers are mounted to a common support 10.

The provision of the two heaters 4a and 4b, or more, offers the advantage that the part of the inner pipe member that is heated at one time is extended in its longitudinal direction, resulting in a less steep temperature gradient forwardly of the heaters. Such a gentle temperature gradient in the longitudinal direction of the inner pipe member gives it greater freedom of thermal expansion in the radial direction. Consequently, the heating temperature can be reduced to realize a given degree of radial expansion.

However, for the most efficient final radial expansion of the inner pipe member, the temperature gradient should be as steep as possible between its heated and cooled parts. Mounted to the support 10, the disc-like splash guard 11 serves this purpose, preventing the water showers of the cooler from splashing the part of the inner pipe member that is being heated by the heaters 4a and 4b. The arrangement of Figure 3 makes it possible for the inner pipe member to be more efficiently expanded into a snug fit with the outer pipe member.

The invention has so far been described as adapted for radial expansion of the inner pipe member against the outer pipe member for the production of double-wall pipes. The same principles are applicable for radially expanding the outer pipe member out of engagement with the inner pipe member in the disassemblage of double-wall pipes, as discussed in detail hereafter.

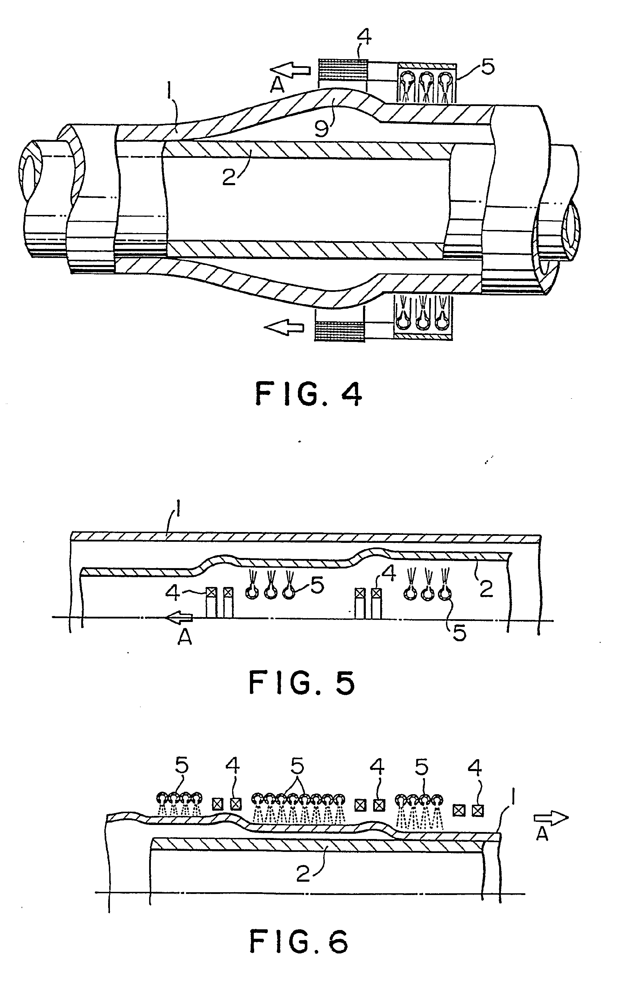

A typical arrangement for the disassemblage of a double-wall pipe by themethod of the invention is illustrated in Figure 4, in which the various parts are identified by the same reference numerals as used to denote the corresponding parts of the Figure 1 arrangement. Placed around the double-wall pipe comprising the outer pipe member 1 and the inner pipe member 2, the heater 4 and the cooler 5 are fed longitudinally of the double-wall pipe, with the heater foremost, as indicated by the arrows A. As has been explained with reference to Figure 2, the successive annular part 9 of the outer pipe member 1 is first radially expanded by the heater 4 and then contracted by the cooler 5, but to a diameter greater than its initial diameter. Therefore, as the heater 4 and cooler 5 are jointly advanced from end to end of the nested pipe assembly, the complete length of the outer pipe member 1 is disengaged from the inner pipe member 2. The disassemblage of the double-wall pipe will become easier if two or more heaters are provided in a row in the longitudinal direction of the pipe, and/or if a splash guard is provided between the heaters and the cooler, as in Figure 3.

As will be readily understood, the invention permits the simultaneous heating and cooling of the inner or outer pipe member at two or more points spaced in its longitudinal direction. Thus, in Figure 5, two sets of heaters 4 and coolers 5 are shown provided in longitudinally spaced positions within the inner pipe member 2 for increasing its diameter against the outer pipe member 1. As the two sets of heaters and coolers are jointly fed in the direction of the arrow A, the inner pipe member 2 undergoes a stepwise increase in diameter as pictured in Figure 5.

Figure 6, on the other hand, shows three sets of heaters 4 and coolers 5 disposed in longitudinally spaced positions around the outer pipe member 1 of a double-wall pipe. The outer pipe member 1 can be efficiently expanded out of engagement with the inner pipe member 2 as the three sets of heaters and coolers are jointly moved relative to the pipe in the direction of the arrow A.

As is apparent from the foregoing disclosure, the method of the invention makes it possible to produce double-wall pipes only by increasing the diameter of the inner pipe member. The diameter of the outer pipe member remains absolutely the same before and after the radial expansion of the inner pipe member. The double-wall pipes thus manufactured find application to heat exchangers and atomic power plants where severe dimensional accuracy is imposed on the outside pipe diameters for positive connection to holders, brackets and other fittings. The invention permits the manufacture of double-wall pipes whose outside diameter is infallibly the same as that of the outer pipe member before the radial expansion of the inner pipe member.

Another advantage is that, since only the inner pipe member is subjected to thermal deformation, the outer pipe member can be supported in any convenient manner during the production of the double-wall pipe.

Additionally, the interior of the inner pipe member can be used for mounting the means for its thermal deformation. The high-frequency induction heater and shower ring cooler may be readily placed within the inner pipe member and relatively fed in its longitudinal direction.

There is a particular advantage accruing from use of a high-frequency induction heater. Fed through the inner pipe member, the high-frequency induction heater acts to cumulatively heat the surrounding and forward parts of the pipe member, causing such parts to radially expand more readily than the rearward part of the pipe member. The rearward part of the inner pipe member can thus be effectively cooled for firm engagement with the outer pipe member.

Still further, the method of the invention is applicable to the production of double-wall pipes of practically any required diameter or any required length.

It will also be appreciated that the principles of the invention are equally applicable to the separation of the inner and outer pipe members of double-wall pipes.

## INDUSTRIAL APPLICABILITY

The invention finds application to the production of double-wall pipes for use in heat exchangers, atomic power plants and other piping applications where dimensional errors in the outside diameters of the pipes must be kept at a minimum. It is also applicable to the disassemblage of double-wall pipes into the inner and outer pipe members.

CLAIMS

1. A method of processing a double-wall pipe wherein an inner pipe member is thermally expanded radially for tight fit with an outer pipe member for the production of a double-wall pipe, characterized by comprising the steps of providing a pipe assembly having an inner pipe member loosely received within an outer pipe member, placing within the inner pipe member of the pipe assembly heater means and cooler means adjacent to each other in the axial direction of the inner pipe member, jointly moving the heater means and the cooler means, with the heater means foremost, relative to the pipe assembly in the longitudinal direction thereof, and thereby heating the successive annular part of the inner pipe member by the heater means while cooling the neighboring annular part of the inner pipe member by the cooler means.

2. A method of processing a double-wall pipe as claimed in claim 1, wherein the inner pipe member of the pipe assembly is heated by a high-frequency induction heater.

3. A method of processing a double-wall pipe as claimed in claim 1, wherein the inner pipe member of the pipe assembly is heated by a burner.

4. A method of processing a double-wall pipe as claimed in claim 1, wherein the inner pipe member of the pipe assembly is cooled by a shower ring.

5. A method of processing a double-wall pipe as claimed in claim 1, wherein the inner pipe member of the pipe assembly is heated by a series of heaters disposed longitudinally of the inner pipe member.

6. A method of processing a double-wall pipe as claimed in claim 1, wherein a splash guard is provided between the heater means and the cooler means.

7. A method of processing a double-wall pipe as claimed in claim 1, wherein the inner pipe member of the pipe assembly is heated and cooled by a plurality of sets of heaters and coolers spaced longitudinally of the inner pipe member.

8. A method of processing a double-wall pipe having inner and outer pipe members snugly nested together, characterized by comprising the steps of placing around the double-wall pipe annular heater means and annular cooler means adjacent to each other in the longitudinal direction of the double-wall pipe, and jointly moving the heater means and the cooler means, with the heater means foremost, relative to the double-wall pipe in the longitudinal direction thereof, thereby radially expanding the outer pipe member to separate it from the inner pipe member.

9. A method of processing a double-wall pipe as claimed in claim 8, wherein the outer pipe member of the double-wall pipe is heated by a high-frequency induction heater.

10. A method of processing a double-wall pipe as claimed in claim 8, wherein the outer pipe member of the double-wall pipe is heated by a burner.

11. A method of processing a double-wall pipe as claimed in claim 8, wherein the outer pipe member of the double-wall pipe is cooled by a shower ring.

12. A method of processing a double-wall pipe as claimed in claim 8, wherein the outer pipe member of the double-wall pipe is heated by a series of heaters disposed longitudinally of the outer pipe member.

13. A method of processing a double-wall pipe as claimed in claim 8, wherein a splash guard is provided between the heater means and the cooler means.

14. A method of processing a double-wall pipe as claimed in claim 8, wherein the outer pipe member of the double-wall pipe is heated and cooled by a plurality of sets of heaters and coolers spaced longitudinally of the outer pipe member.

FIG. 1

FIG. 2

FIG. 3

FIG. 4

FIG. 5

FIG. 6

# INTERNATIONAL SEARCH REPORT

International Application No  PCT/JP88/01268

**I. CLASSIFICATION OF SUBJECT MATTER** (if several classification symbols apply, indicate all) [6]

According to International Patent Classification (IPC) or to both National Classification and IPC

Int.Cl[4] B21C37/06, B23P11/02 //F16L9/00

**II. FIELDS SEARCHED**

| Minimum Documentation Searched [7] | |
|---|---|
| Classification System | Classification Symbols |
| IPC | B21C37/06, B23P11/02 |

Documentation Searched other than Minimum Documentation
to the Extent that such Documents are Included in the Fields Searched [8]

| | |
|---|---|
| Jitsuyo Shinan Koho | 1926 – 1988 |
| Kokai Jitsuyo Shinan Koho | 1971 – 1988 |

**III. DOCUMENTS CONSIDERED TO BE RELEVANT** [9]

| Category * | Citation of Document, [11] with indication, where appropriate, of the relevant passages [12] | Relevant to Claim No. [13] |
|---|---|---|
| A | JP, B1, 45-24015 (Nippon Kokan Kabushiki Kaisha) 11 August 1970 (11. 08. 70) (Family: none) | 1-14 |
| A | JP, A, 62-61721 (Kawasaki Heavy Industries, Ltd.) 18 March 1987 (18. 03. 87) & US, A, 4,727,641 | 1-14 |

* Special categories of cited documents: [10]

"A"  document defining the general state of the art which is not considered to be of particular relevance

"E"  earlier document but published on or after the international filing date

"L"  document which may throw doubts on priority claim(s) or which is cited· to establish the publication date of another citation or other special reason (as specified)

"O"  document referring to an oral disclosure. use. exhibition or other means

"P"  document published prior to the international filing date but later than the priority date claimed

"T"  later document published after the international filing date or priority date and not in conflict with the application but cited to understand the principle or theory underlying the invention

"X"  document of particular relevance: the claimed invention cannot be considered novel or cannot be considered to involve an inventive step

"Y"  document of particular relevance: the claimed invention cannot be considered to involve an inventive step when the document is combined with one or more other such documents, such combination being obvious to a person skilled in the art

"&"  document member of the same patent family

**IV. CERTIFICATION**

| Date of the Actual Completion of the International Search | Date of Mailing of this International Search Report |
|---|---|
| February 27, 1989 (27. 02. 89) | March 13, 1989 (13. 03. 89) |

| International Searching Authority | Signature of Authorized Officer |
|---|---|
| Japanese Patent Office | |

Form PCT/ISA/210 (second sheet) (January 1985)